# EUROPÄISCHE PATENTANMELDUNG

(11) **EP 0 558 787 A1**
(43) Veröffentlichungstag der Anmeldung: **08.09.1993**
(21) Anmeldenummer: 92103833.7
(22) Anmeldetag: 06.03.1992
(51) Int. Cl.: B29C 45/14, F16J 3/02

(54) **Verfahren zum Herstellen von Membranen**

(71) Anmelder: HONEYWELL B.V., NL-1101 EA Amsterdam Z.O. (NL)
(72) Erfinder: Feitsma, Jan Louw, NL-7891 TL Klazienaveen (NL); Alberts, Johannes Pauwel, NL-7823 RE Emmen (NL)
(74) Vertreter: Rentzsch, Heinz, Dipl.-Ing.

(57) **Zusammenfassung**

Für pneumatische Geräte, insbesondere Druckregler, wird eine rückstellkraftarme Folienmembran in einem Arbeitsgang in einer Form (16,17) hergestellt, wobei an einer Membranfolie zugleich ein verdickter zentraler Membranteller (12) sowie ein verdickter äußerer Einspannrand (14) erzeugt werden.

## Beschreibung

Für pneumatische Geräte wie Druckregler, pneumatische Verstärker und Differenzdruckmeßgeräte werden Gummimembranen unterschiedlicher Gestalt benutzt. Die einfachste Membran besteht aus einem kreisförmigen Mittelteil größerer Dicke, an welchem mit Hilfe eines metallischen Membrantellers ein Ventilschließkörper, eine Ventilstange oder ein anderes Übertragungsglied befestigt ist. Dieser Mittelteil ist von einem dünnen elastischen, die eigentliche Membran bildenden ringförmigen Teil umgeben, an den sich außen ein wiederum im Querschnitt verstärkter Wulst anschließt, der die Membran allseitig umgibt und als Dichtung und zugleich der Halterung der Membran in einem Gehäuse dient. Zur Herstellung solcher Membranen wird üblicherweise der metallische Membranteller in eine Gießform für die Membran eingelegt, so daß beim Einspritzen des Gummis in die Form der Gummi im zentralen Teil der Membran auf den Membranteller aufvulkanisiert wird. Es sind auch sogenannte Membranplatten bekannt, bei denen eine größere rechteckig oder anderweit geformte Gummiplatte mehrere als Membran dienende und jeweils einen Membranteller ringförmig umgebende Abschnitte aufweist, so daß einstückig mehrere getrennt wirksame Membranen gebildet sind, die als einheitliche Platte zwischen zwei Gehäusehälften eingespannt werden.

Bei Meß- und Regelgeräten stören vielfach die Temperaturabhängigkeit der Elastizität von Gummimembranen sowie die relativ hohen Rückstellkräfte, welche sie einer Bewegung entgegensetzen, so daß Geräte dieser Art mit einer nicht vernachlässigbaren Hysterese behaftet sind.

Günstiger sind in dieser Hinsicht Kunststoffmembranen, welche eine äußerst geringe Dicke und Steifigkeit haben und damit für ihre Verformung wesentlich geringere Kräfte benötigen als Gummimembranen und darüber hinaus auch weitgehend rückstellkraftfrei sind. Kunststoffolien sind leicht zu biegen, aber im Gegensatz zu Gummi kaum zu strecken.

Solche Kunststoffmembranen hat man bisher in der Weise hergestellt, daß man auf eine dünne kreisförmige Membranfolie im mittleren Teil zu beiden Seiten eine aus Metall oder Kunststoff dienende Versteifungsplatte aufgeklebt oder mit Ultraschall aufgeschweißt und den Rand der Membranfolie durch einen aufgeklebten ringförmigen Wulst aus einem elastischen Kunststoff oder Gummi verstärkt hat. Diese Herstellungsweise ist aufwendig und führt insbesondere bei nicht völlig gleichmäßigem Auftrag der Klebschicht zu Verspannungen und Unregelmäßigkeiten.

Aufgabe der Erfindung ist es deshalb, die Herstellung von Kunststoffmembranen zu vereinfachen und zu verbessern. Dies gelingt durch das im Anspruch 1 gekennzeichnete Verfahren. Dabei erweist es sich als günstig, daß thermoplastische Kunststoffe geschmolzen und wieder in den festen Zustand überfühlt werden können, was bei Gummi nicht möglich ist. An denjenigen Stellen in der Gießform, wo die Folie nicht an der Wandung der Form anliegt, schmilzt die Folie, sobald der heiße thermoplastische Kunststoff in die Form eingespritzt wird. Dort, wo die Folie an der Form anliegt, schmilzt sie nicht, sondern behält die Temperatur der Form. Vorteilhafte Ausgestaltungen ergeben sich aus den Unteransprüchen.

Zur Erläuterung der Erfindung wird nachfolgend auf in den Zeichnungen wiedergegebene Ausführungsbeispiele Bezug genommen. Darin zeigt:
- Fig. 1a und 1b: den Aufbau einer herkömmlichen Folienmembran in Draufsicht und im Schnitt;
- Fig. 2a und 2b: Draufsicht und Schnitt durch eine nach dem Verfahren gemäß der Erfindung hergestellte Foliemembran;
- Fig. 2c: die Beweglichkeit des zentralen Mittelteils einer solchen Folienmembran, und
- Fig. 2d: einen Schnitt durch eine zweiteilige Spritzform zur Herstellung einer solchen Folienmembran;
- Fig. 3a und 3b: eine zwei Einzelmembranen umfassende Membranplatte in Draufsicht und Schnitt;
- Fig. 3c: die zugehörige Spritzgießform;
- Fig. 4a und 4b: in Draufsicht bzw. im Schnitt eine Doppelmembran, bei der die Einzelmembranen nicht wie in Figur 3 nebeneinander, sondern längs der Bewegungsachse übereinander angeordnet sind;
- Fig. 4c: einen Schnitt durch die entsprechende Spritzgießform, und
- Fig. 4d: einen Schnitt längs der Linie A-A in Figur 4c durch die bewegliche Zwischenplatte der Gießform;
- Fig. 5: die Stationen des Herstellungsvorgangs.

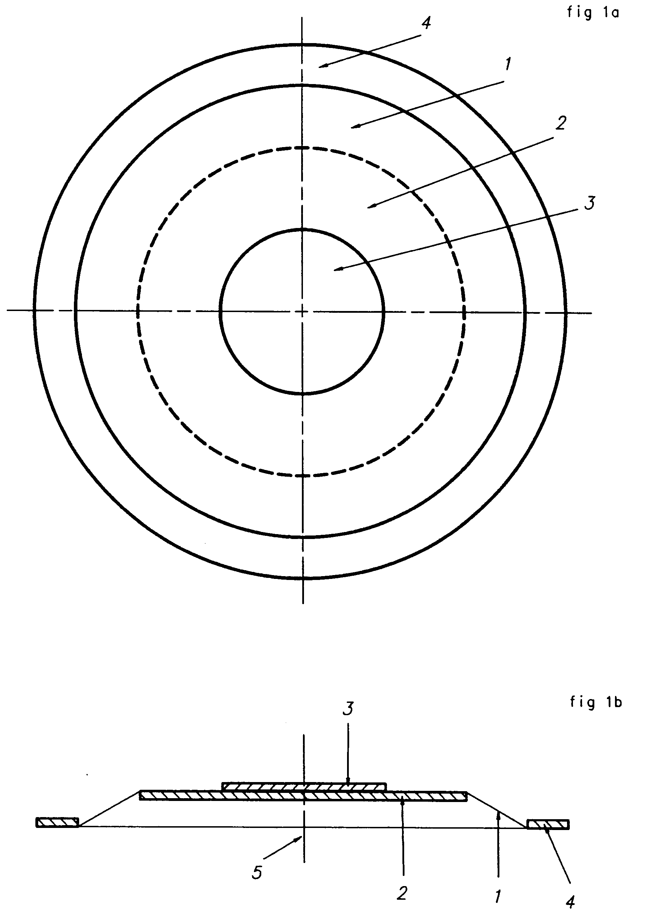

Bei der bekannten Folienmembran gemäß Figur 1 sind auf eine kreisförmige Membranfolie 1 konzentrisch zueinander eine Membranplatte 2 sowie auf der gegenüberliegenden Seite eine Halteplatte 3 aufgeklebt, deren Durchmesser jeweils geringer ist als der der Membranfolie. Am äußeren Rand der Membranfolie ist ein Versteifungsring 4 aufgeklebt, mit dessen Hilfe die Membran in ein Gerät eingespannt wird. Der Durchmesserunterschied zwischen dem Versteifungsring 4 und der Membranplatte 2 bestimmt die frei bewegliche Membranfläche und damit deren größtmögliche Auslenkung längs der Achse 5. Die größtmögliche Auslenkung ist einerseits durch den genannten Durchmesserunterschied festgelegt und andererseits durch die Herstellungsform. Da die Folie nicht elastisch ist, wird sie in der Form im ausgelenkten Zustand hergestellt.

An der Halteplatte 3 kann beispielsweise eine Ventilstange befestigt sein, eine Rückstellfeder angreifen oder ein sonstiges bewegliches Teil eines pneumatischen Umformers, Reglers oder Steuer- bzw. Meßgerätes befestigt sein. Die vernachlässigbare Steifigkeit der Membranfolie 1 ist zwar für die Genauigkeit des Gerätes von Vorteil; die Herstellung der Membran ist jedoch umständlich, zumal die Befestigung der Platten 2 und 3 und des Halterings 4 eine genaue Zentrierung erfordert und der Klebstoffauftrag möglichst nur auf die aneinanderliegenden Flächen beschränkt sein soll.

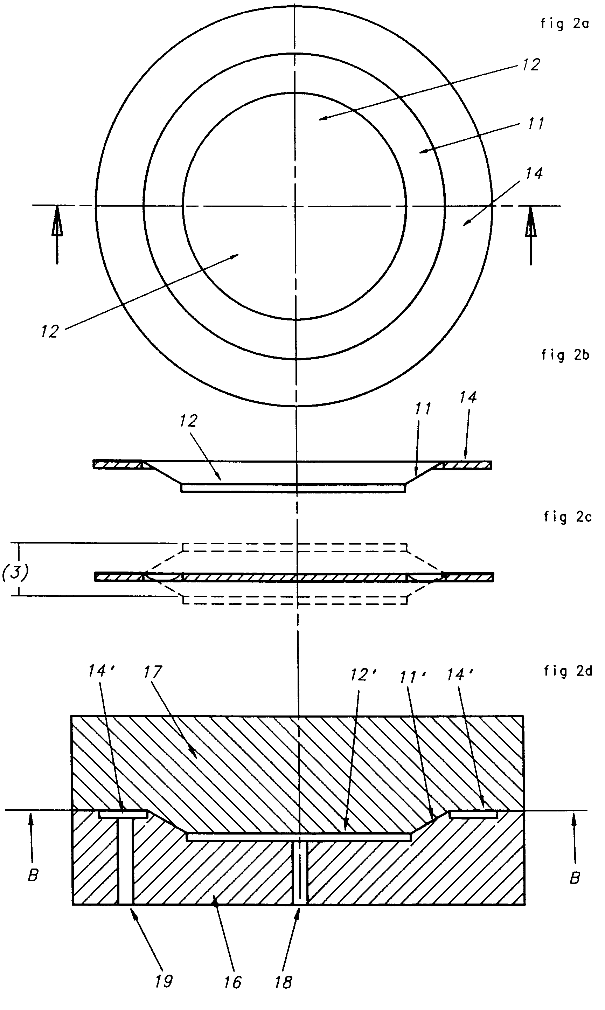

Die in Figur 2 wiedergegebene Folienmembran gemäß der Erfindung hingegen wird in einem Arbeitsgang durch Spritzgießen in einer Form hergestellt. Die Folie besteht beispielsweise aus Polyester (Schmelztemperatur etwa 200°C), Polyurethanelastomer (Schmelztemperatur etwa 150°C) oder Polycarbonat (Schmelztemperatur etwa 150°C). Die Membran besteht aus einem folienartigen, äußerst rückstellkraftarmen, ringförmigen Zwischenteil 11, einer wesentlich dickeren zentralen Halteplatte 12 sowie einem ebenfalls dickeren äußeren Einspannrand 14. Für die hinsichtlich der Wandstärke dickeren Teile, wie zentrale Halteplatte 12 und Einspannrand finden bevorzugt thermoplastische oder thermoreaktive Kunststoffe, insbesondere faserverstärkte Kunststoffe Anwendung. Ihre Dicke liegt vorzugsweise zwischen 0,8 und 1 mm. Die Folie ist nur etwa 0,005 bis 0,2mm, vorzugsweise 0,006 mm dick.

Zur Herstellung der Membran dient eine in Fig. 2d schematisch im Schnitt dargestellte, aus einem Unterteil 16 und einem Oberteil 17 bestehende Gießform, wobei längs der Schnittlinie B-B entsprechend der gewünschten Wandstärke der Membran ausgebildete Hohlräume 11', 12', und 14' gebildet sind.

Zunächst wird die Folie 11 in die Form eingelegt. Dann wird die Spritzmasse über mehrere Injektorkanäle 18 und 19 in die Hohlräume 12' und 14' eingespritzt. In Figur 2d sind nur zwei solcher im stationären Unterteil 16 vorgesehener Injektorkanäle dargestellt. Es können jedoch auch mehrere solcher Injektorkanäle vorhanden sein, welche dann vorzugsweise gleichmäßig über den Umfang der Form verteilt sind. An denjenigen Stellen, wo die Folie an der Wand der Form anliegt, schmilzt beim Einspritzen des Kunststoffs die Folie nicht, weil sie wegen ihrer geringen Dicke praktisch die gegenüber der Einspritztemperatur niedrigere Temperatur der Form annimmt und beibehält. Dort hingegen, wo die Folie frei in einen Hohlraum hineinragt, wird sie unter dem Einfluß der Temperatur des eingespritzen Kunststoffs schmelzen und sich im Kunststoff lösen. Durch geeignete Formgebung der Ränder wird sichergestellt, daß die Folie keinesfalls in unmittelbarer Nähe von Kanten der Form schmilzt. Hierzu wird die Form an den entsprechenden Stellen abgerundet bzw. durch Auswahl des Folienwerkstoffs oder durch Aufbringen einer dünnen Haftschicht wird gewährleistet, daß sich die Folie gegen die Wand der Form legt und an dieser haftet.

Dort, wo die Folie frei einen Hohlraum überspannt, wird sie beim Einspritzen des Kunststoffs zumindest gegenüber den Einspritzkanäle wegschmelzen, so daß Verstärkungen zu beiden Seiten der Folienebene hergestellt werden können, obwohl nur auf einer Seite Einspritzkanäle vorgesehen sind. Von dieser Möglichkeit wird man insbesondere im zentralen Bereich der Halteplatte 12 Gebrauch machen, wenn dieser beispielsweise auf der einen Seite eine Abstützfläche für eine Rückstellfeder bilden soll und auf der gegenüberliegenden Seite einen Ventilschließkörper oder eine Ventilstange oder sonstiges Übertragungsmittel trägt. Einige bevorzugte Temperaturbereiche für die Einspritztemperatur des Kunststoffs und die Temperatur der Form ergeben sich aus nachfolgender Tabelle:

| | Einspritztemperatur | Temperatur der Form |
|---|---|---|
| Polycarbonat | 235 - 350 °C | 80 - 120 °C |
| Polyester | 230 - 290 | 30 - 200 |
| Polyurethan | 175 - 240 | 40 - 80 |
| Bakelit | 85 - 100 | 155 - 180 |
| ABS | 200 - 270 | 40 - 80 |

Bakelit ist ein Beispiel für ein thermoreaktives Material, welches normalerweise aus zwei flüssigen Komponenten besteht, die gemischt und in die Form eingespritzt werden. Dort reagieren sie chemisch miteinander und zwar nicht reversibel. Die angegebene Temperatur wird in diesem Fall zur Beschleunigung der Reaktion benutzt. Diese kann mit unterschiedlicher Geschwindigkeit und bei unterschiedlichen Temperaturen erfolgen. Thermoplastische Werkstoffe sind jedoch für diesen Herstellungsprozeß noch besser geeignet.

Zur abgedichteten Einspannung der Membran zwischen zwei Gehäuseteilen ist es von Vorteil, den äußeren Haltering 14 aus einem elastomeren Material herzustellen. Für die zentrale Halteplatte 12 und den äußeren Einspannring können also unterschiedliche Kunststoffe verwendet werden.

Nach dem Erkalten der Kunststoffmasse wird das bewegliche Oberteil 17 der Form abgehoben und die einstückige Folienmembran entnommen. Sie hat beim Ausführungsbeispiel gemäß Figur 2 kreisförmige Gestalt. Die zentrale Halteplatte 12 ist steif und fest genug, um ohne zusätzliche metallische Halteplatte eine Ventilstange zu tragen, als Anlagefläche für eine Rückstellfeder zu dienen oder anderweit auf ein bewegliches Organ eines pneumatischen Geräts einzuwirken. Sie kann beispielsweise direkt als Ventilschließkörper oder Federabstützring ausgeformt sein, so daß auch diese der speziellen Anwendung der Membran dienende Gestalt der Membranplatte zusammen mit dieser in einem einzigen Arbeitsgang hergestellt wird.

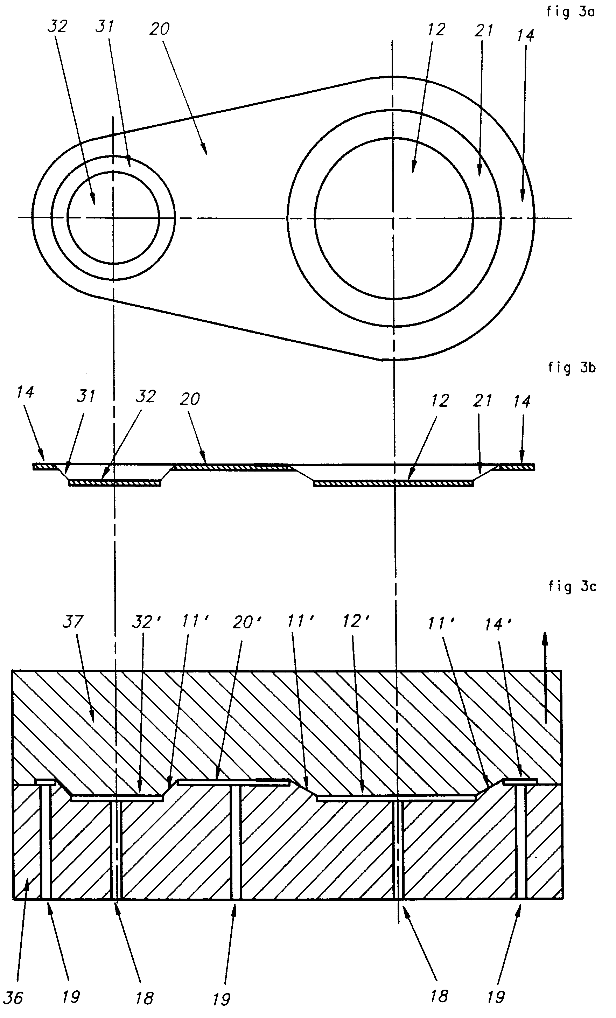

In Figur 3 ist eine sogenannte Membranplatte 20 dargestellt, welche zwei einzelne Membranteile 21 und 31 unterschiedlichen Durchmessers umschließt. Wiederum sind einstückig mit der eigentlichen Membranfolie 21, 31 einerseits die steifen Membranteller 12 und 32 größerer Wandstärke sowie andererseits der Halterand 14 zusammen mit dem ebenfalls dickeren Zwischenstück 20 zwischen den beiden Einzelmembranen hergestellt.

Hierzu dient die in Figur 3c dargestellte zweigeteilte Spritzform bestehend aus einem stationären Unterteil 36 und einem beweglichen Oberteil 37. Die Hohlräume 11', 12', 14' und 20' werden wie zuvor anhand von Figur 2 beschrieben durch die Injektorkanäle 18 und 19 mit Kunststoff gefühlt, nach dessen Erkalten das Oberteil 37 abgehoben und die Membranplatte entnommen wird.

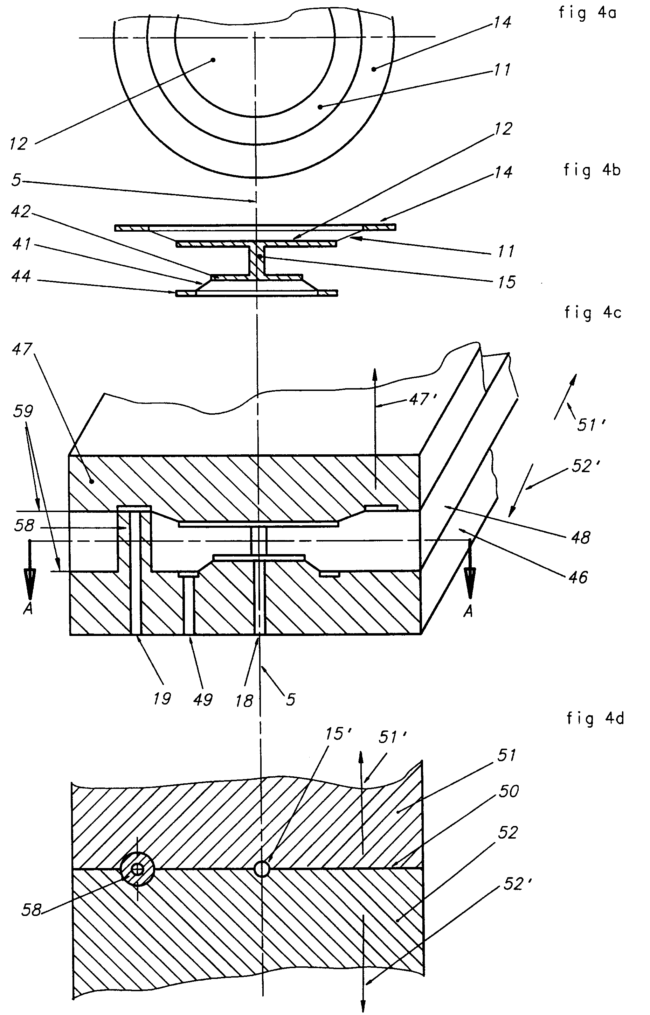

Figur 4 zeigt in Figuren 4a und 4b eine Mehrfachmembran, bei der zwei kreisförmige Membranen in Richtung der Achse 5 übereinander angeordnet und durch einen Steg 15 miteinander verbunden sind. Wiederum erstreckt sich die Membranfolie 11 bzw. 41 zwischen einem äußeren Haltering 14 bzw. 44 und einem zentralen Membranteller 12 bzw. 42.

Der Aufbau der zur Herstellung einer solchen Doppelmembran dienenden Spritzform ist in den Figuren 4c und 4d schematisch wiedergegeben. Diese besteht hier aus einem Unterteil 46, einem Oberteil 47 und einem Zwischenteil 48. Letzteres erstreckt sich zwischen den Teilungsebenen 59. Während das Oberteil 47 in Richtung des Pfeiles 47' abhebbar ist, ist das Zwischenteil 48 längs einer durch die Achse 5 gehenden Vertikalebene 50 geteilt, und beide Teile 51 und 52 sind in Richtung der Pfeile 51' bzw. 52' parallel zu den Trennebenen 59 verschiebbar. Das Einspritzen des Kunststoffes erfolgt wiederum durch die Injektorkanäle 18, 19 bzw. 49, wobei sich der Kanal 19 durch einen aus dem Unterteil 46 nach oben herausragenden Zapfen 58 erstreckt, der bis in die obere der beiden Trennebenen 59 ragt.

Nach dem Einspritzen und Erkalten des Kunststoffs wird zunächst das Oberteil 47 abgehoben, alsdann werden die Zwischenteile 51 und 52 in Richtung der Pfeile 51' und 52' auseinandergezogen und weggenommen, so daß dann die Doppelmembran entsprechend Figur 4b aus der Form herausgenommen werden kann. Doppelmembranen dieser Art werden beispielsweise in Differenzdruckreglern, pneumatischen Verstärkern und anderen pneumatischen Regelgeräten verwendet.

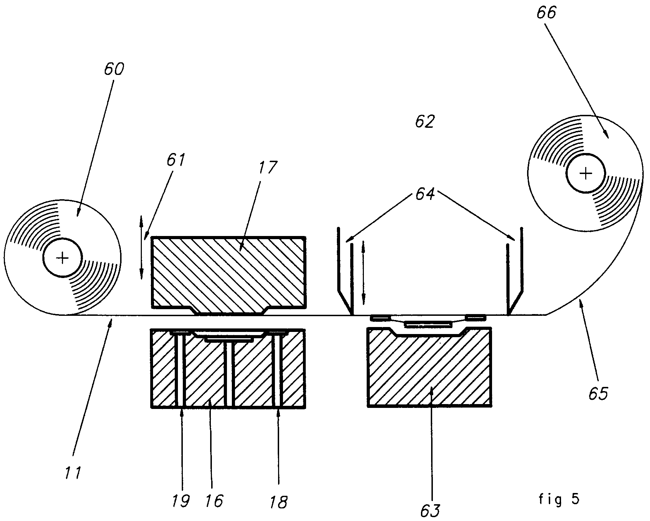

Figur 5 zeigt schematisch den Herstellungsvorgang einer Vielzahl von Folien im Fließbandverfahren. Die Folie 11 wird von einer Vorratsrolle 60 abgezogen und schrittweise in die Trennebene der Gießform 16, 17 bewegt. Die Form wird dann geschlossen und der Kunststoff wird in die Form eingespritzt, beispielsweise mit einem Druck zwischen 500 und 2000 bar. Anschließend wird die Form in Richtung des Pfeils 61 geöffnet, und der Folienfilm um einen zumindest der Länge der Membran in Bewegungsrichtung der Folie 11 entsprechenden Schritt nach rechts bewegt, in eine Schneidvorrichtung 62. Diese besteht aus einem die Membran abstützenden Unterteil 63 und mehreren Messern 64. Gegebenenfalls ist noch ein hier nicht dargestelltes die Membran gegen das Unterteil 63 drückende Haltevorrichtung vorhanden. Nach dem Heraustrennen der Membran mit Hilfe der Messer 64 und dem Entfernen, z.B. Absaugen der Membran wird der verbleibende Restfilm 65, aus dem die Membranen herausgestanzt sind, auf eine Abfallrolle 66 aufgewickelt, die zur Wiederverarbeitung an den Folienhersteller zurückgeliefert wird.

Das Verfahren gemäß der Erfindung ist nicht nur bei den in den Ausführungsbeispielen dargestellten Formen von Membranen anwendbar, sondern auch bei einer Vielzahl weiterer, sich aus der Kombination oder aus Abwandlungen der gezeigten Ausführungsbeispiele ergebender Membranformen. Es erweist sich als äußerst kostengünstig und zugleich sehr genau dimensionierte Membranen lieferndes Herstellungsverfahren, wobei nicht nur die beiden erwähnten Werkstoffe Polyester und Polycarbonat, sondern auch andere, geeignete Eigenschaften aufweisende Kunststoffe eingesetzt werden können.

## Patentansprüche

1. Verfahren zum Herstellen von Membranen für pneumatische Geräte, insbesondere Druckregler mit wenigstens einem versteiften Innenteil (12), einem den Innenteil umgebenden hochbiegsamen Zwischenteil (11) sowie einem verstärkten umlaufenden Randteil (14), **gekennzeichnet durch** folgende Schritte:
a) Bereitstellen einer geteilten Gießform (16, 17) mit Hohlräumen (12', 14') entsprechend dem dünnen biegsamen Zwischenteil (11), dem zur Versteifung verstärkten Innenteil (12) und dem verstärkten Randteil (14);
b) Einlegen einer Folie aus dem Material des biegsamen Zwischenteils (11) in die Form;
c) Schließen der Form (16, 17);
d) Einspritzen eines Kunststoffes in flüssiger Form in die Hohlräume (12', 14');
e) Abkühlen und Herausnehmen der Membran (11, 12, 14) aus der Form (16, 17).

2. Verfahren nach Anspruch 1, **gekennzeichnet durch** die Verwendung eines thermoplastischen Kunststoffs.

3. Verfahren nach Anspruch 1, **gekennzeichnet durch** die Verwendung eines thermoreaktiven Kunststoffs.

4. Verfahren nach Anspruch 1, 2 oder 3, **gekennzeichnet durch** die Verwendung einer Folie aus Kunststoff.

5. Verfahren nach Anspruch 4, **dadurch gekennzeichnet,** daß das Zwischenteil (12) die Stärke einer im wesentlichen rückstellkraftfreien Folie von etwa 0,005 bis 0,2 mm hat.

6. Verfahren nach Anspruch 5, **dadurch gekennzeichnet,** daß die Dicke der Folie (12) etwa 0,006 mm beträgt.

7. Verfahren nach einem der Ansprüche 1 bis 6, **dadurch gekennzeichnet,** daß zum Anbringen von Kunststoffschichten zu beiden Seiten der Folienebene Einspritzkanäle (18, 19) nur in einem der beiden Teile der Gießform vorgesehen sind und der eingespritzte heiße Kunststoff die Folie durchdringt.

8. Anwendung des Verfahrens nach einem der vorangehenden Ansprüche zur Herstellung von nebeneinanderliegenden Mehrfachmembranen (20).

9. Anwendung des Verfahrens nach einem der Ansprüche 1 bis 7 zur Herstellung von im Abstand übereinander angeordneten Mehrfachmembranen (12, 11, 14; 42, 41, 44), deren Innenteile (12; 42) miteinander verbunden sind.

10. Anwendung des Verfahrens nach einem der vorangehenden Ansprüche zum Anformen von Regelventilkörpern am Innenteil (12, 42).
